# DEMANDE DE BREVET EUROPEEN

(11) **EP 1 657 527 A1**
(43) Date de publication de la demande: **17.05.2006**
(21) Numéro de dépôt: 04025898.0
(22) Date de dépôt: 02.11.2004
(51) Int. Cl.: G01D 5/20, G01B 7/30

(54) **Capteur de position angulaire sans contact à effet Hall**

(71) Demandeur: Siemens VDO Automotive, 31036 Toulouse Cédex 1 (FR)
(72) Inventeur: Puech, Didier, 31000 Toulouse (FR)

(57) **Abrégé**

Capteur (5) de position angulaire comprenant :
- un anneau (3) en matériau ferromagnétique présentant un axe (8),
- une source magnétique (1) disposée sensiblement au centre de l'anneau (3) et générant un champ magnétique suivant une direction magnétique (6) sensiblement perpendiculaire à l'axe (8) de l'anneau (3),
- une cellule (2) à effet Hall disposée à l'intérieur de l'anneau (3), sur un rayon (7) passant par le centre de l'anneau et perpendiculaire à la direction magnétique (6) et à l'axe (8) de l'anneau (3), ladite cellule (2) à effet Hall mesurant le champ magnétique radial,
- un guide de flux magnétique (4) interposé entre la source magnétique (1) et la cellule (2) à effet Hall, ledit guide de flux magnétique étant mobile en rotation autour de la source magnétique suivant l'axe (8) de l'anneau (3).

## Description

L'invention concerne un capteur de position angulaire sans contact.

Elle a pour objet de proposer un capteur de position angulaire précis, robuste et relativement peu onéreux.

Conformément à l'invention, le capteur de position angulaire comprend :
- un anneau en matériau ferromagnétique présentant un axe,
- une source magnétique disposée sensiblement au centre de l'anneau et générant un champ magnétique suivant une direction magnétique sensiblement perpendiculaire à l'axe de l'anneau,
- une cellule à effet Hall disposée à l'intérieur de l'anneau, sur un rayon passant par le centre de l'anneau et perpendiculaire à la direction magnétique et à l'axe de l'anneau, ladite cellule à effet Hall mesurant le champ magnétique radial,
- un guide de flux magnétique en matériau ferromagnétique interposé entre la source magnétique et la cellule à effet Hall, ledit guide de flux magnétique étant mobile en rotation autour de la source magnétique suivant l'axe de l'anneau.

Ce capteur de position angulaire possède une grande robustesse du fait de l'absence de contact entre les éléments. Il présente une bonne linéarité entre les variations de tension relevées par la cellule à effet Hall et les déplacements angulaires du guide de flux magnétique par rapport à la source magnétique, à la cellule à effet Hall et à l'anneau.

Afin d'améliorer la linéarité, conformément à l'invention, le guide de flux magnétique se présente sous forme d'un secteur angulaire de tube.

Avantageusement, le secteur angulaire est compris entre 120 degrés et 150 degrés. En dessous de 120 degrés, la réduction du secteur angulaire se traduit par une réduction de la plage de linéarité du capteur de position angulaire, tandis qu'au-delà de 150 degrés l'augmentation du secteur ne permet plus d'accroître la plage de linéarité du capteur de position angulaire qui ne peut guère excéder 120 degrés.

Conformément à une autre caractéristique conforme à l'invention, la source magnétique est un aimant permanent parallélépipédique. Le défaut de linéarité peut ainsi être contenu à quelques dixièmes de pour-cent sur plus de 100 degrés.

En variante, la source magnétique est un aimant permanent cylindrique de section circulaire s'étendant coaxialement par rapport à l'anneau. Le défaut de linéarité brut est plus important que celui de la réalisation précitée, mais il peut être très fortement corrigé en appliquant un correctif de type sinusoïdal.

L'invention va apparaître encore plus clairement dans la description qui va suivre, faite en référence aux dessins annexés dans lesquels :
- la figure 1 est une représentation en perspective d'un capteur de position angulaire conforme à l'invention,
- les figures 2, 3 et 4 représentent les lignes de champ magnétique dans le capteur de position angulaire pour trois positions angulaires différentes,
- la figure 5 représente suivant un plan radial une variante de réalisation.

Tel qu'illustré, le capteur de position angulaire 5 comprend quatre éléments : une source magnétique 1, une cellule à effet Hall 2, un anneau 3 et un secteur angulaire 4 formant un guide de flux magnétique.

L'anneau 3 et le secteur 4 doivent être en matériau ferromagnétique et avoir une perméabilité élevée pour permettre un guidage du flux magnétique. Avantageusement, ils sont réalisés en fer pur pour diminuer le phénomène d'hystérésis.

L'anneau 3 est circulaire et présente un axe 8. Sa section est sensiblement rectangulaire.

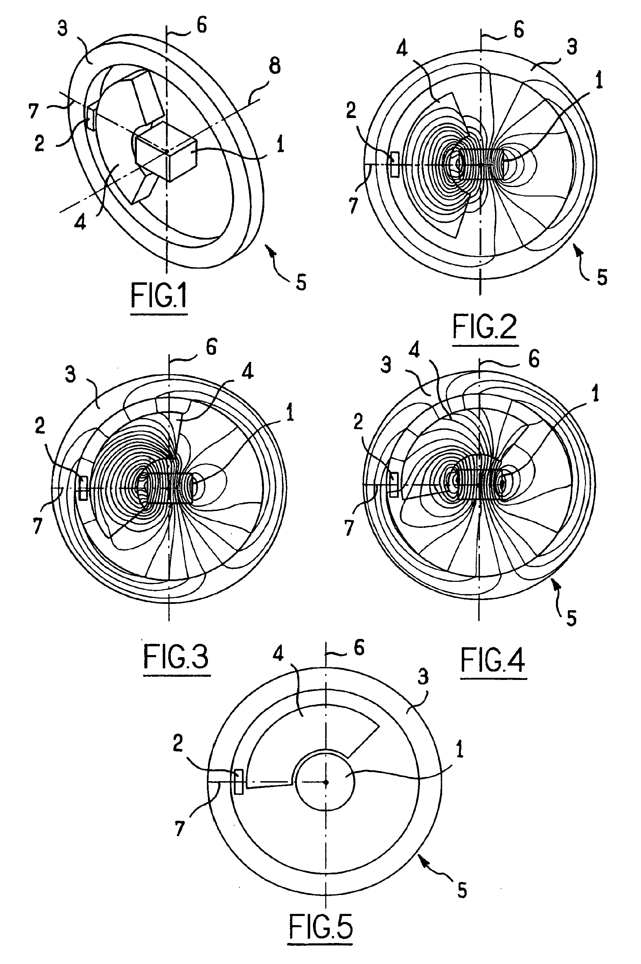

La source magnétique 1 représentée à la figure 1 est constituée par un aimant permanent situé au centre de l'anneau 3. La direction 6 de son aimantation suit un diamètre de l'anneau. L'aimant 1 et l'anneau 3 sont fixes l'un par rapport à l'autre.

La cellule 2 à effet Hall est disposée suivant un rayon 7 de l'anneau s'étendant perpendiculairement à la direction magnétique 6. Elle détecte le champ magnétique radial proche de l'anneau. Elle est fixe par rapport à l'anneau 3. La tension de sortie de la cellule 2 est proportionnelle au flux magnétique la traversant.

Le secteur 4 est placé entre l'aimant 1 et la cellule 2. Il s'étend sur environ 140 degrés et est mobile en rotation par rapport aux autres éléments autour de l'axe de l'anneau 3. Il s'étend radialement entre deux surfaces radiales cylindriques, de sorte qu'il se présente sous forme d'une portion de tube.

Il guide le flux en provenance de l'aimant 1 vers l'anneau 3. Suivant sa position, le secteur 4 récupère une partie plus ou moins importante de ce flux.

Ainsi, la figure 2 correspond à la position médiane du secteur 4 : son centre est situé sur le rayon 7. Dans cette position, le secteur crée un court-circuit magnétique entre les deux pôles de l'aimant : il y a très peu de flux qui passe dans l'anneau. Le champ magnétique vu par la cellule 2 est nul.

La figure 3 correspond à une position intermédiaire dans laquelle le secteur a pivoté de 30 degrés : le secteur 4 récupère une partie du flux généré par l'aimant 1 et le dirige vers l'anneau 3 de façon uniforme : la cellule 2 voit un champ magnétique moyen.

En continuant de faire tourner le secteur 4, le champ relevé par la cellule 2 continue de croître linéairement, le secteur couvrant en effet de plus en plus l'un des pôles de l'aimant et récupérant ainsi davantage de flux. Dans la position illustrée à la figure 4, le secteur couvre quasiment tout le pôle, de sorte que le flux relevé par la cellule 2 est maximum. Le secteur 4 a pivoté de 70 degrés.

Le flux étant uniforme entre le secteur et l'anneau, le positionnement de la cellule 2 n'a pas besoin d'être très précise.

La réalisation représentée à la figure 5 se distingue de celle de la figure 1, en ce que la source magnétique est constituée par un aimant cylindrique 1 en forme de disque s'étendant coaxialement au centre de l'anneau 3. Il est aimanté suivant la même direction magnétique 6. La variation du signal relevé par la cellule 2 est alors sinusoïdale. Après traitement pour supprimer la composante sinusoïdale, on peut obtenir une linéarité du signal aussi satisfaisante qu'avec la réalisation illustrée à la figure 1 et une amplitude de rotation similaire.

Bien entendu, l'invention n'est nullement limitée à la réalisation qui vient d'être décrite à titre d'exemple non limitatif. Ainsi, on pourrait prévoir une bobine alimentée électriquement à la place des aimants permanents, en tant que source magnétique.

## Revendications

1. Capteur (5) de position angulaire comprenant :
- un anneau (3) en matériau ferromagnétique présentant un axe (8),
- une source magnétique (1) disposée sensiblement au centre de l'anneau (3) et générant un champ magnétique suivant une direction magnétique (6) sensiblement perpendiculaire à l'axe (8) de l'anneau (3),
- une cellule (2) à effet Hall disposée à l'intérieur de l'anneau (3), sur un rayon (7) passant par le centre de l'anneau et perpendiculaire à la direction magnétique (6) et à l'axe (8) de l'anneau (3), ladite cellule (2) à effet Hall mesurant le champ magnétique radial,
- un guide de flux magnétique (4) interposé entre la source magnétique (1) et la cellule (2) à effet Hall, ledit guide de flux magnétique étant mobile en rotation autour de la source magnétique suivant l'axe (8) de l'anneau (3).

2. Capteur de position angulaire selon la revendication 1, **caractérisé en ce que** le guide de flux magnétique (4) se présente sous forme d'un secteur angulaire de tube.

3. Capteur de position angulaire selon la revendication 2, **caractérisé en que** le secteur angulaire est compris entre 120 degrés et 150 degrés.

4. Capteur de position angulaire selon l'une quelconque des revendications 1 à 3, **caractérisé en ce que** la source magnétique (1) est un aimant permanent de forme parallélépipédique.

5. Capteur de position angulaire selon l'une quelconque des revendications 1 à 3, **caractérisé en ce que** la source magnétique (1) est un aimant permanent cylindrique de section circulaire s'étendant coaxialement par rapport à l'anneau (3).
